# EUROPÄISCHE PATENTANMELDUNG

(11) **EP 1 619 079 A2**
(43) Veröffentlichungstag der Anmeldung: **25.01.2006**
(21) Anmeldenummer: 05015703.1
(22) Anmeldetag: 20.07.2005
(51) Int. Cl.: B60R 9/042

(54) **Vorrichtung zum Tragen von Lasten am Äusseren eines Fahrzeuges**

(30) Priorität: 22.07.2004 DE 102004035612
(71) Anmelder: Ernst, Claus, 77889 Seebach (DE)
(72) Erfinder: Ernst, Claus, 77889 Seebach (DE); Schneider, Thomas, 77883 Ottenhöfen (DE)
(74) Vertreter: Crazzolara, Helmut

(57) **Zusammenfassung**

Die Erfindung betrifft eine Vorrichtung (1) zum Tragen von Lasten am Äußeren eines Fahrzeuges (10), insbesondere Lastenträger für ein Kraftfahrzeug, mit einem ersten Teil (2), das an dem Fahrzeug (10) fest montierbar ist, und einem zweiten Teil (3), an dem die zu tragende Last festlegbar ist oder das die zu tragende Last aufnimmt, dadurch gekennzeichnet, dass zum Be- oder Entladen das zweite Teil (3) mittels einer Führungseinrichtung (5, 6, 7) gegenüber dem ersten Teil (2) ausgehend von einer Betriebs- oder Fahrposition in eine Beladeposition mit geringerer Ladehöhe überführbar ist.

## Beschreibung

Die Erfindung betrifft eine Vorrichtung zum Tragen von Lasten am Äußeren eines Fahrzeuges, insbesondere einen Lastenträger für ein Kraftfahrzeug, gemäß dem Oberbegriff des Anspruchs 1.

Gattungsgemäße Vorrichtungen sind beispielsweise aus der DE 198 11 004 A1 bekannt. Ein Problem stellt das Be- und Entladen derartiger Vorrichtungen dar, insbesondere wenn es sich dabei um Fahrzeuge mit großer Höhe und/oder Breite handelt, die Bedienperson nicht allzu groß ist oder die zu befestigende Last unhandlich und/oder schwer ist.

Häufig ist das Be- und Entladen bei einem solchen Dachgepäckträger nur möglich, wenn die Bedienperson bei geöffneter Fahrzeugtür auf die Türschwelle aufsteigt und sich dadurch eine erhöhte Position verschafft. Dabei wird aber das Be- und/oder Entladen aufgrund der sich ergebenden ungünstigen fahrzeugnahen seitlichen Position verschlechtert. Es entsteht sowohl eine Verletzungsgefahr für die Bedienperson als auch für das Fahrzeug oder für das zu befestigende Transportgut.

Der Erfindung liegt daher die Aufgabe zugrunde, eine Vorrichtung bereitzustellen, welche die Nachteile des Standes der Technik überwindet. Insbesondere soll eine Vorrichtung bereitgestellt werden, durch die ein einfaches, kraftsparendes und sicheres Be- und/oder Entladen möglich ist. Die Vorrichtung soll möglichst universell und bei vielen Fahrzeugtypen einsetzbar sein, kostengünstig herstellbar sein, sowie einfach in der Montage und Demontage sein.

Diese Aufgabe ist durch die im Anspruch 1 bestimmte Vorrichtung gelöst. Besondere Ausführungsarten der Erfindung sind in den Unteransprüchen bestimmt.

Die Erfindung ist bei einer Vorrichtung zum Tragen von Lasten am Äußeren eines Fahrzeuges, insbesondere Lastenträger für ein Kraftfahrzeug, mit einem ersten Teil, das an dem Fahrzeug fest montierbar ist, und einem zweiten Teil, an dem die zu tragende Last festlegbar ist oder das die zu tragende Last aufnimmt, dadurch gelöst, dass zum Be- oder Entladen das zweite Teil mittels einer Führungseinrichtung gegenüber dem ersten Teil ausgehend von einer Betriebs- oder Fahrposition in eine Beladeposition mit geringerer Ladehöhe überführbar ist.

Das erste Teil der Vorrichtung kann in an sich bekannter Weise in der Art eines Grundträgers an dem Fahrzeug fest montierbar sein, beispielsweise an einer Dachreling des Fahrzeugs montierbar sein, an einer hierfür vorgesehenen Nutenschiene am Fahrzeug anschraubbar sein oder in eine Regenrinne des Fahrzeugs anklemmbar sein. In vielen Anwendungsfällen wird das erste Teil insbesondere an einem Dach des Fahrzeugs fest montierbar sein. Darüber hinaus ist aber auch eine Montage beispielsweise an einer Hecktür, einem Kofferraum oder an einer Anhängerkupplung möglich.

An dem zweiten Teil der Vorrichtung ist die Last festlegbar. Bei dem zweiten Teil kann es sich beispielsweise um Streben zum Festschrauben eines Fahrrades oder zum Festspannen eines Kajaks handeln, oder um einen so genannten Dachkoffer zum Aufnehmen von Skiern, Kinderwagen oder dergleichen.

Erfindungsgemäß kann das zweite Teil mittels der Führungseinrichtung in eine Beladeposition mit geringerer Ladehöhe überführt werden. Dies erfolgt vorzugsweise sowohl durch ein Schieben als auch durch ein Kippen des zweiten Teils gegenüber dem ersten Teil. Insbesondere durch das Kippen ist es möglich, auch bei Fahrzeugen mit großer Bauhöhe oder Breite eine bequeme niedrige Beladeposition herbeizuführen. Durch das Schieben wird das zweite Teil außerdem in eine Position überführt, in der es jedenfalls teilweise, vorzugsweise vollständig, neben dem Fahrzeug positioniert ist. Dadurch entfällt das Risiko einer Beschädigung des Fahrzeugs praktisch vollständig.

Vorzugsweise weist die Führungseinrichtung ein bezüglich des Schiebens feststehendes erstes Element auf, das gegenüber dem am Fahrzeug fest montierten ersten Teil der Vorrichtung kippbar ist. Das Gelenk zum Kippen kann entweder unmittelbar zwischen dem ersten Element der Führungseinrichtung und dem ersten Teil der Vorrichtung gebildet sein. Alternativ hierzu kann die Führungseinrichtung ein drittes Element aufweisen, das die Gelenkstelle zu dem ersten Element der Führungseinrichtung ausbildet und das an dem ersten Teil der Vorrichtung fest montierbar ist. Im letztgenannten Fall ist es möglich, für die erfindungsgemäße Vorrichtung weitgehend oder sogar vollständig handelsübliche erste und zweite Teile zu verwenden, an welche eine erfindungsgemäße Führungseinrichtung festgelegt wird. Dadurch können vorhandene Teile einer bekannten gattungsgemäßen Vorrichtung weiterverwendet werden.

Ein zweites Element der Führungseinrichtung ist vorzugsweise gegenüber dem ersten Element verschiebbar geführt, vorzugsweise mittels einer Linearführung. Dadurch, dass das erste Element bezüglich des Schiebens feststehend ist, ergibt sich auch bei großen Verschiebestrecken eine zuverlässige und sichere Führung des zweiten Elements, an dem das zweite Teil der Vorrichtung fest montierbar ist.

Vorzugsweise ist das zweite Teil mittels einer Arretiereinrichtung in der Betriebs- oder Fahrposition arretierbar. Die Arretiereinrichtung kann dabei sowohl ein Schieben als auch ein Kippen des zweiten Teils gegenüber dem ersten Teil der Vorrichtung blockieren. In einer besonderen Ausführungsart der Erfindung wird durch die Arretiereinrichtung das Schieben unmittelbar blockiert, wogegen das Kippen erfordert, dass zuvor das zweite Teil der Vorrichtung gegenüber dem ersten Teil mindestens ein Stück weit aus der Betriebs- oder Fahrposition verschoben ist. Mithin erfolgt das Blockieren des Kippens nur mittelbar durch das unmittelbare Blockieren des Schiebens.

Das Kippen wird vorzugsweise durch den formschlüssigen Eingriff eines ersten Arretierungselements blockiert. Durch den Formschluss ist gewährleistet, dass die Blockierung zuverlässig und unabhängig von Reibungskräften gewährleistet ist, deren Betrag durch Witterungseinflüsse bestimmt sein kann. Vorzugsweise bildet das erste Teil der Vorrichtung oder ein bezüglich des Kippens und Schiebens feststehendes Element der Führungseinrichtung einerseits und das zweite Element der Führungseinrichtung andererseits einen Vorsprung und eine Aufnahme aus, in welche der Vorsprung formschlüssig eingreifen kann; beispielsweise greift ein an dem ersten Teil der Vorrichtung angeordnetes stiftförmiges erstes Arretierungselement in der Betriebs- oder Fahrposition verriegelnd in eine endseitige Öffnung des profilschienenartigen zweiten Elements der Führungseinrichtung ein, sodass das zweite Element gegenüber dem ersten Element in der Betriebs- oder Fahrposition nicht kippbar ist. Vorzugsweise ist das erste Arretierungselement an einer von dem Gelenk für das Kippen entfernten Stelle angeordnet. Dadurch lassen sich auch mit vergleichsweise geringen Kräften hohe Arretierungsdrehmomente gewährleisten.

In einer besonderen Ausführungsart ist die Arretiereinrichtung mittels eines Schlüssels verschließbar. Dies gewährleistet sowohl eine gute Sicherung gegen Diebstahl als auch eine hohe Betriebssicherheit.

Die Arretiereinrichtung weist vorzugsweise zwei weitere Arretierungselemente auf, durch die unabhängig voneinander das zweite Teil der Vorrichtung in der Betriebs- oder Fahrposition arretierbar ist, insbesondere das zweite Element der Führungseinrichtung gegenüber dem ersten Element arretierbar ist und mithin das Schieben arretierbar ist. Zum Aufheben der Arretierung müssen beide weiteren Arretierungselemente betätigt werden. Dadurch wird insbesondere zuverlässig verhindert, dass nach dem Lösen eines ersten weiteren Arretierungselements sich das zweite Teil in gefährdender oder jedenfalls unerwünschter Weise selbsttätig, beispielsweise aufgrund von Gravitationskräften, gegenüber dem ersten Teil bewegt.

In einer besonderen Ausführungsart der Erfindung kann die Arretiereinrichtung als erstes weiteres Arretierungselement einen drehbaren Handgriff aufweisen, dessen Drehung mittels eines Schlüssels verriegelbar ist. Nach dem Aufschließen und Drehen des Handgriffs kann es zusätzlich noch erforderlich sein, eine Entriegelungstaste zu drücken, um dadurch ein zweites weiteres Arretierungselement in eine entriegelnde Position zu überführen. Beide weiteren Arretierungselemente sind vorzugsweise mit einer Hand zu bedienen, insbesondere ist die Entriegelungstaste in Griffbereich des Handgriffs angeordnet.

Aus den entsprechenden Gründen weist die Vorrichtung vorzugsweise eine Rasteinrichtung auf, mittels der das zweite Teil in der Beladeposition lösbar rastbar ist, insbesondere die Kippposition des zweiten Elements der Führungseinrichtung. Es ist auch möglich, dass verschiedene Rastpositionen zum Beladen vorgesehen sind.

In einer besonderen Ausführungsart der Erfindung weist die Vorrichtung einen Kraftspeicher auf, der beim Überführen des zweiten Teils in die Beladeposition Kraft speichert und damit das Rückführen des zweiten Teils in die Betriebs- oder Fahrposition unterstützt. Dabei kann es sich grundsätzlich auch um einen rein mechanischen Federkraftspeicher handeln. Vorzugsweise werden jedoch pneumatische oder hydraulische Kraftspeicher eingesetzt, die beispielsweise zwischen dem ersten Teil der Vorrichtung oder einem feststehenden dritten Element der Führungseinrichtung und dem ersten Element der Führungseinrichtung wirken. Bevorzugt werden hierfür Gasdruck- oder Gaszugfedern eingesetzt. Vorteilhaft ist dabei, dass das Einspeichern der Kraft beim Überführen in die Beladeposition durch die Gravitation unterstützt wird, die zu speichernde Kraft also nicht oder nicht ausschließlich manuell aufgebracht werden muss. Im Falle einer motorischen Unterstützung der Rückführung des zweiten Teils in die Betriebs- oder Fahrposition können alternativ oder ergänzend zum Kraftspeicher auch pneumatische, hydraulische oder elektrische Antriebsmittel vorgesehen sein.

In vielen Anwendungsfällen der vorliegenden Erfindung ist das erste Teil der Vorrichtung sowie das erste, zweite und dritte Element der Führungseinrichtung quer zur Fahrtrichtung des Fahrzeugs montiert. Dabei können mehrere erste Teile, insbesondere zwei erste Teile, sowie entsprechend mehrere erste, zweite und dritte Elemente der Führungseinrichtung in Fahrtrichtung hintereinander angeordnet sein.

Die erfindungsgemäße Vorrichtung kann rein manuell betätigt werden, insbesondere kann das Überführen von der Betriebs- oder Fahrposition in die Beladeposition und umgekehrt rein manuell erfolgen. Davon unberührt ist jedoch die Möglichkeit, das Überführen erfindungsgemäß teilweise oder vollständig motorisch zu unterstützen, insbesondere anhand von Elektromotoren oder mit einem pneumatischen oder hydraulischen Antrieb.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt schematisch eine Ansicht einer erfindungsgemäßen Vorrichtung,
- Fig. 2 bis 6: zeigen verschiedene Positionen beim Überführen aus einer Betriebs- oder Fahrposition in eine Beladeposition,
- Fig. 7: zeigt eine detailliertere perspektivische Ansicht der Vorrichtung der Fig. 1,
- Fig. 8: zeigt eine perspektivische Detailansicht der Arretierungseinrichtung,
- Fig. 9: zeigt eine perspektivische Ansicht eines Ausschnitts der Vorrichtung in der Beladeposition,
- Fig. 10: zeigt einen Querschnitt durch ein zweites Ausführungsbeispiel der erfindungsgemäßen Vorrichtung, und
- Fig. 11: zeigt eine Seitenansicht des zweiten Ausführungsbeispiels der Fig. 10 in der Beladeposition.

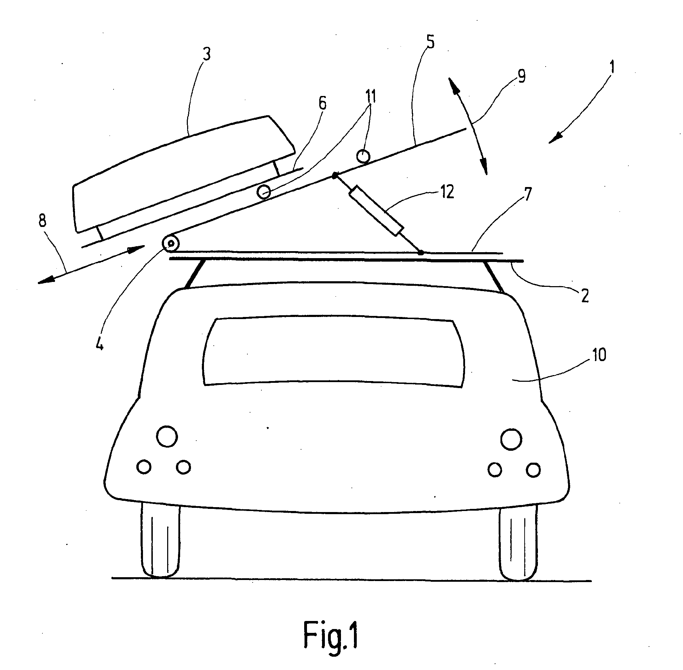

Die Fig. 1 zeigt schematisch eine Ansicht einer erfindungsgemäßen Vorrichtung 1 zum Tragen von Lasten am Äußeren eines Fahrzeuges 10, wobei die Fahrtrichtung senkrecht zur Zeichenebene der Fig. 1 verläuft. Die Vorrichtung 1 weist ein erstes Teil 2 auf, das an dem Fahrzeug 10 in der Art eines Grundträgers fest an das Fahrzeug 10 montiert ist. Weiterhin weist die Vorrichtung 1 ein zweites Teil 3 auf, das die zu tragende Last aufnimmt, im dargestellten Ausführungsbeispiel einen so genannten Dachkoffer. Alternativ zum dargestellten Dachkoffer kann das zweite Teil 3 beispielsweise auch ein Skiträgeraufsatz oder ein sonstiger Aufsatz sein, an dem die zu tragende Last festlegbar ist.

Weiterhin weist die Vorrichtung 1 eine aus den ersten, zweiten und dritten Elementen 5, 6, 7 bestehende Führungseinrichtung auf, mittels der das zweite Teil 3 zum Be- oder Entladen gegenüber dem ersten Teil 2 ausgehend von einer Betriebs- oder Fahrposition in eine Beladeposition mit geringerer Ladehöhe überführbar ist. Die Führungseinrichtung 5, 6, 7 ermöglicht dabei sowohl ein Schieben des zweiten Elements 6 gegenüber dem ersten Element 5, wie dies durch den Doppelpfeil 8 angedeutet ist, als auch ein Kippen des ersten Elements 5 zusammen mit dem zweiten Element 6, wie dies durch den Doppelpfeil 9 angedeutet ist, gegenüber dem dritten Element 7, das an dem ersten Teil 2 fest montiert ist.

Die Anordnung des Gelenks 4 zum Kippen zwischen dem ersten Element 5 und dem dritten Element 7 hat anstelle einer Anordnung zwischen dem ersten Element 5 und dem ersten Teil 2 auch den Vorteil, dass die Führungseinrichtung zusammen mit einem bekannten Grundträger verwendet werden kann. Das erste Element 5 ist bezüglich des Schiebens 8 feststehend. An dem ersten Element 5 sind freilaufende Rollen 11 angeordnet, mittels denen das zweite Element 6 und damit das zweite Teil 3 der Vorrichtung 1 entsprechend dem Doppelpfeil 8 verschiebbar ist.

Vorzugsweise sind in Fahrtrichtung senkrecht zur Zeichenebene der Fig. 1 mehrere, insbesondere zwei erste Teile 2 der Vorrichtung 1 und jeweils zwei erste, zweite und dritte Elemente 5, 6, 7 der Führungseinrichtung hintereinander angeordnet.

Zwischen dem ersten Element 5 und dem dritten Element 7 der Führungseinrichtung ist ein Kraftspeicher 12 angeordnet, vorzugsweise eine Gaszugfeder, der beim Überführen des zweiten Teils 3 aus der Fahrposition in die Beladeposition, insbesondere beim Kippen des ersten Elements 5 entgegen dem Uhrzeigersinn in der Fig. 1, Kraft speichert. Der Kraftspeicher 12 übt bereits in der in der Fig. 1 dargestellten Position auf das erste Element 5 ein Drehmoment in Richtung des Uhrzeigersinns um die durch das Gelenk 4 bestimmte Kippachse aus, das eine Rückführung des zweiten Teils 3 in die Fahrposition unterstützt. Der Kraftspeicher 12 kann anstelle der Befestigung am dritten Element 7 auch an einem anderen Teil oder Element der Vorrichtung 1 festgelegt sein, insbesondere auch am ersten Teil 2 der Vorrichtung 1.

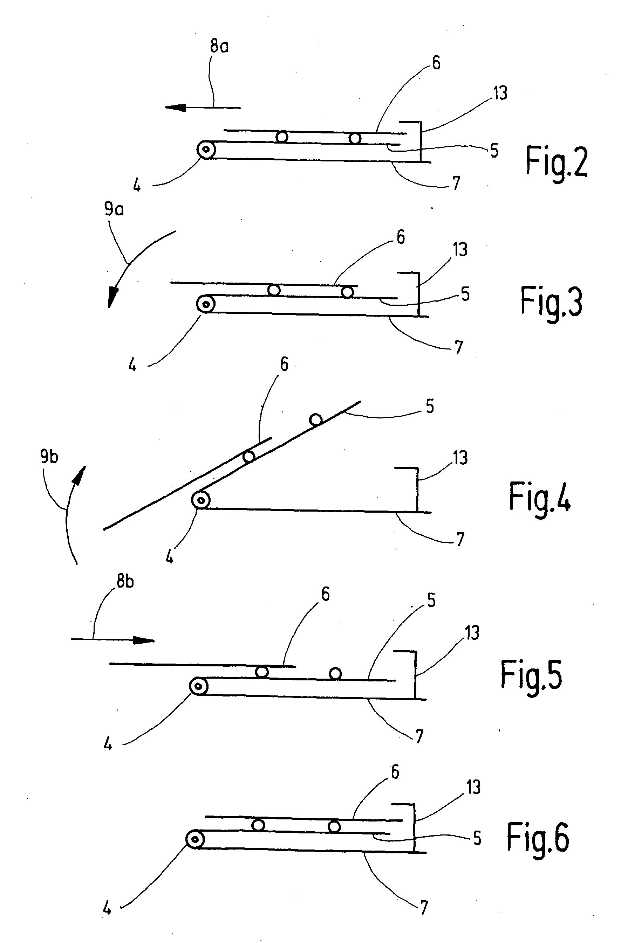

Die Figuren 2 bis 6 zeigen verschiedene Positionen beim Überführen des zweiten Teils 3 der Vorrichtung 1 und mithin des zweiten Elements 6 der Führungseinrichtung aus einer Betriebs- oder Fahrposition (Figuren 2 und 6) in eine Beladeposition (Fig. 4) mit geringerer Ladehöhe. Aus Gründen der besseren Übersichtlichkeit wurde dabei auf eine Darstellung des ersten und zweiten Teils 2, 3 der Vorrichtung verzichtet. Entsprechend der Darstellung in der Fig. 1 sind das erste Teil 2 der Vorrichtung 1 und das dritte Element 7 der Führungseinrichtung fest miteinander verbunden; entsprechend ist das zweite Teil 3 der Vorrichtung 1 mit dem zweiten Element 6 der Führungseinrichtung fest verbunden.

Die Fig. 2 zeigt die Vorrichtung 1 bzw. die Führungseinrichtung 5, 6, 7 in einer Betriebs- oder Fahrposition. Durch eine in den Figuren 2 bis 6 nicht dargestellte Arretiereinrichtung ist ein Verschieben des zweiten Elements 6 gegenüber dem ersten Element 5 blockiert. Gleichzeitig ist ein erstes Arretierelement 13 mit dem zweiten Element 6 der Führungseinrichtung in formschlüssigen Eingriff. Hierzu kann das erste Arretierelement 13 beispielsweise das zweite Element 6 bügelartig umgreifen oder in eine Öffnung des zweiten Elements 6 eingreifen, sodass aufgrund der unmittelbaren Blockierung des Verschiebens des zweiten Elements 6 gegenüber dem ersten Element 5 aufgrund der Arretiereinrichtung mittelbar auch ein Verkippen des ersten Elements 5 gegenüber dem dritten Element 7 blockiert ist.

Ausgehend von der Betriebs- oder Fahrposition der Fig. 2 wird nach Lösen der Blockierung der Arretiereinrichtung zunächst das zweite Element 6 entsprechend dem Pfeil 8a jedenfalls so weit verschoben, dass der formschlüssige Eingriff des ersten Arretierelements 13 aufgehoben ist. Damit ergibt sich die in der Fig. 3 dargestellte Position. Nun kann das erste Element 5 gemeinsam mit dem zweiten Element 6 entsprechend dem Pfeil 9a mittels des Gelenks 4 verkippt werden. Bei diesem Verkippen nimmt der in der Fig. 1 dargestellte Kraftspeicher 12 Energie auf. Gleichzeitig kann das zweite Element 6 bis in eine gegebenenfalls auch rastbare Endposition herausgezogen werden.

In der Fig. 4 ist die Beladeposition dargestellt, wobei diese Beladeposition ebenfalls rastbar sein kann. Nach dem Beladen und gegebenenfalls Verschließen des in der Fig. 1 dargestellten Dachkoffers wird das erste und zweite Element 5, 6 entsprechend dem Pfeil 9b zurückgekippt. Hierbei wirkt der in der Fig. 1 dargestellte Kraftspeicher 12 unterstützend. Alternativ oder ergänzend kann auch eine diesbezügliche motorische Antriebsvorrichtung vorgesehen sein.

In der Fig. 5 sind das erste und zweite Element 5, 6 vollständig zurückgekippt und nun wird das zweite Element 6 entsprechend dem Pfeil 8b in die Betriebs- oder Fahrposition zurückgeführt, wobei es wiederum zu einem formschlüssigen Eingriff des ersten Arretierelements 13 mit dem zweiten Element 6 kommt. In der Fig. 6 ist die Betriebs- oder Fahrposition erreicht und die Vorrichtung wird arretiert.

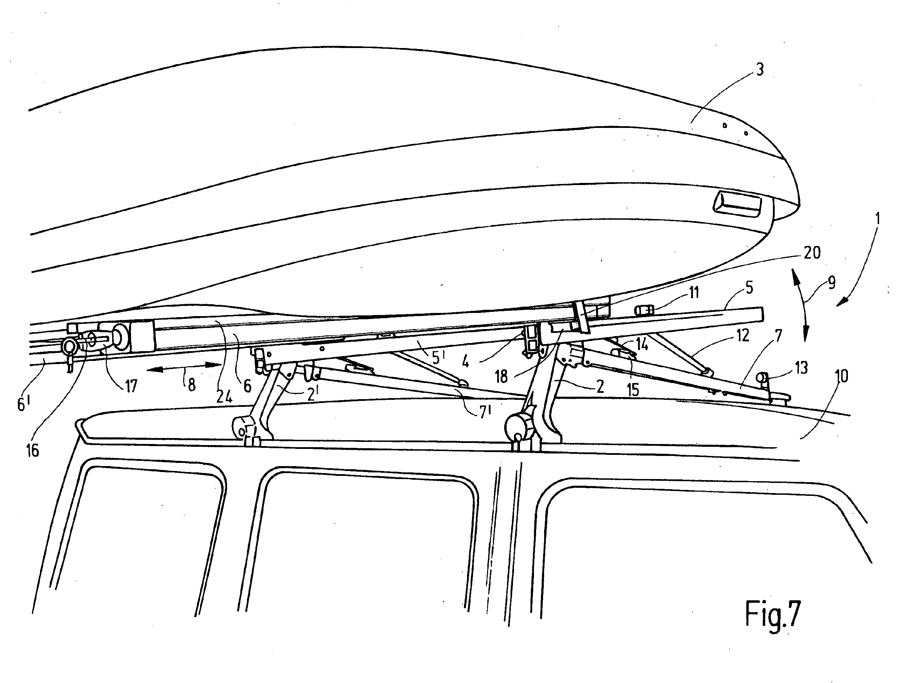

Die Fig. 7 zeigt eine detailliertere perspektivische Ansicht der Vorrichtung 1 der Fig. 1. Daraus ist ersichtlich, dass in Fahrtrichtung zwei erste Teile 2, 2' sowie zwei erste, zweite und dritte Elemente 5, 5'; 6, 6'; 7, 7' der Führungseinrichtung in identischer Ausgestaltung hintereinander angeordnet sind. Daher soll im Folgenden die Vorrichtung 1 lediglich unter Bezugnahme auf eine dieser Anordnungen beschrieben werden.

Bei dem ersten Teil 2 handelt es sich um einen quer zur Fahrtrichtung im wesentlichen von einer Seite zur anderen Seite des Fahrzeugs 10 sich horizontal erstreckenden Grundträger, der im vorliegenden Fall an die Dachrinne des Fahrzeugs 10 festgeklemmt ist. An dem ersten Teil 2 ist lösbar das dritte Element 7 fest montiert, bei dem es sich um eine im Querschnitt U-förmige Profilschiene handelt. An ihrem der Bedienseite zugewandten Ende weist das dritte Element 7 eine Anlenkstelle für das erste Element 5 auf und bildet insbesondere einen Lagerbock für das Gelenk 4.

Auch das erste Element 5 ist als im Querschnitt U-förmige Profilschiene ausgebildet, wobei die offene Seite der Profilschiene dem dritten Element 7 und dem ersten Teil 2 zugewandt ist und diese in der Fahrposition mindestens teilweise übergreift. Dadurch ergibt sich eine formschlüssige Verbindung und gleichzeitig ist die Bauhöhe in der Fahrposition reduziert. Der Kraftspeicher 12 ist mit jeweils einem Ende an dem ersten Element 5 und an dem dritten Element 7 angelenkt.

Weiterhin ist zwischen dem ersten Element 5 und dem dritten Element 7 ein Rastbügel 14 vorgesehen, insbesondere an dem ersten Element 5 angelenkt, der in eine Rastaufnahme 15 lösbar eingreift, die vorzugsweise an dem dritten Element 7 festgelegt ist, insbesondere festgenietet ist. Durch das Zusammenwirken von Rastmittel 14 und Rastaufnahme 15 kann insbesondere die Beladeposition der Vorrichtung 1 rastbar sein. Auf ihrer von dem dritten Element 7 wegweisenden Bodenfläche sind an der Profilschiene des ersten Elements 5 Rollen 11 montiert, mittels denen das zweite Element 6 entsprechend dem Doppelpfeil 8 gegenüber dem ersten Element 5 mit geringen Reibungskräften verschiebbar ist. Das zweite Element 6 ist dabei als eine im Querschnitt C-förmige Profilschiene ausgebildet, wobei die offene Seite der C-förmigen Profilschiene zum ersten Element 5 hinweist und den Eintritt der Rollen 11 in den Hohlraum der C-förmigen Profilschiene ermöglicht. Der Durchmesser der Rollen 11 ist dabei an die lichte Höhe des Hohlraums der C-förmigen Profilschiene derart angepasst, dass ein geringes Bewegungsspiel quer zur Längsführung gewährleistet ist.

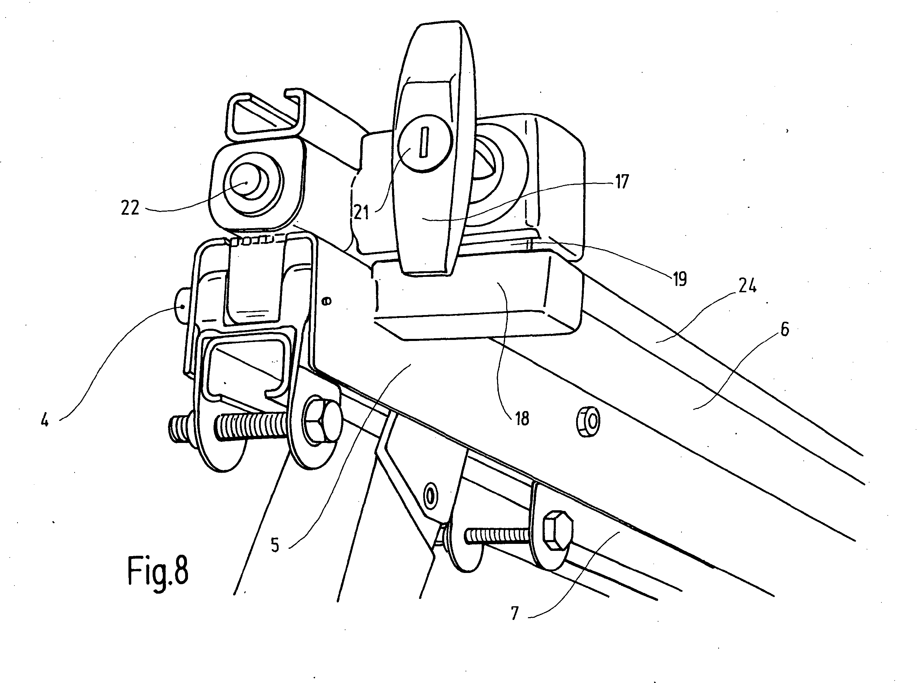

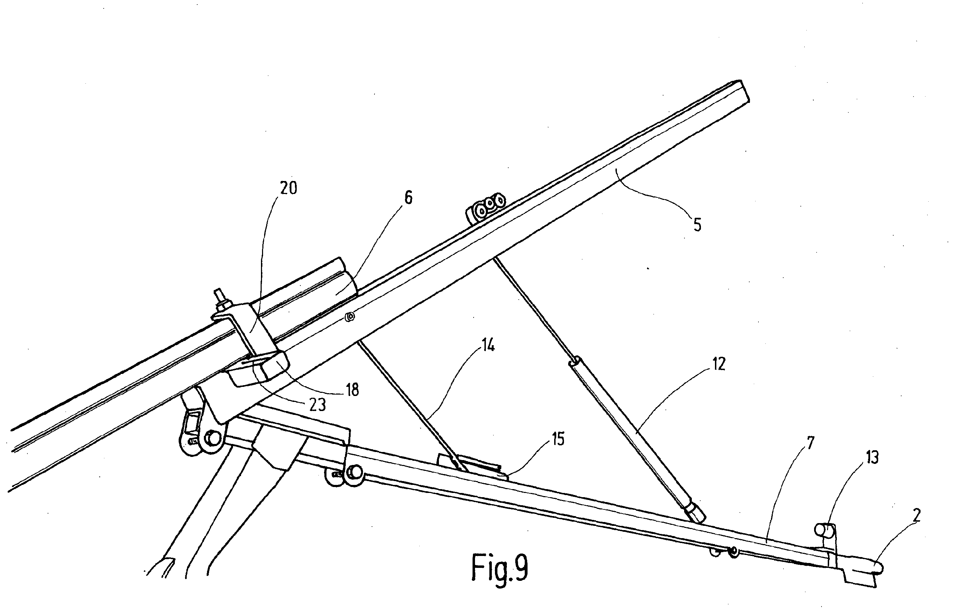

In der in den Figuren 2 und 6 dargestellten Betriebs- oder Fahrposition ist das zweite Element 6 in Bezug auf das erste Element 5 arretiert. Hierzu ist an dem zweiten Element 6 an seinem der Bedienseite zugewandten Ende ein mit einem Schlüssel 16 verschließbarer Handgriff 17 vorgesehen, durch dessen Drehen ein Riegel 19 (Fig. 8) in einen Schlitz 23 (Fig. 9) einer an dem ersten Element 5 vorgesehene Riegelaufnahme 18 eingreifen kann und mithin das zweite Element 6 gegenüber dem ersten Element 5 hinsichtlich eines Verschiebens blockiert.

Die Riegelaufnahme 18 bildet gleichzeitig einen mechanischen Anschlag für die Schiebebewegung in Richtung der Beladeposition durch Anlage einer an dem zweiten Element 6 angebrachten Lasche 20. Anstelle der Lasche 20 kann auch ein anderweitig ausgebildeter Vorsprung an dem zweiten Element 6, beispielsweise ein angeschweißter oder angenieteter Zapfen, in Zusammenwirkung mit der Riegelaufnahme 18 den mechanischen Anschlag bilden. Die Profilschiene des zweiten Elements 6 ist an ihrem der Bedienseite gegenüberliegenden Ende offen, sodass hier das an dem entsprechenden Ende des dritten Elements 7 angeordnete Arretierungselement 13 eingreifen kann und in der Betriebs- oder Fahrposition ein Kippen blockiert.

Auf der Profilschiene des zweiten Elements 6 ist eine im Querschnitt C-förmige Halteschiene 24 festgelegt, insbesondere vernietet, die einer vereinfachten Befestigung des zweiten Teils 3 der Vorrichtung 1 dient.

Die Fig. 8 zeigt eine perspektivische Detailansicht der Arretierungseinrichtung in der Position, in welcher der ein mit dem Schlüssel 16 betätigbares Schloss 21 aufweisende Handgriff 17 so gedreht ist, dass der Riegel 19 in die Riegelaufnahme 18 eingreift und mithin ein Verschieben des zweiten Elements 6 gegenüber dem ersten Element 5 blockiert. Nach dem Aufschließen und Drehen des Handgriffs 17 ist noch ein zweites weiteres Arretierungselement in blockierendem Eingriff und verhindert ein Verschieben des zweiten Elements 6.

Die Blockierwirkung des zweiten weiteren Arretierungselements muss mit der federkraftbelasteten Lösetaste 22 aufgehoben werden, erst dann kann das zweite Element 6 gegenüber dem ersten Element 5 verschoben und anschließend auch das zweite Element 6 zusammen mit dem ersten Element 5 gegenüber dem dritten Element 7 gekippt werden. Die Lösetaste 22 kann dabei betätigt werden, ohne die Hand vom Handgriff 17 zu nehmen. Der Handgriff 17 dient außerdem zum Schieben und Kippen.

Die Fig. 9 zeigt eine perspektivische Ansicht eines Ausschnitts der Vorrichtung 1 in der Beladeposition. Die Lasche 20 ist in Anlage an der Riegelaufnahme 18 und verhindert ein weiteres Verschieben des zweiten Elements 6. Der Kraftspeicher 12 hat in diesem Zustand die maximale Federenergie aufgenommen und gespeichert. Der Rastbügel 14 ist in Eingriff mit der Rastaufnahme 15 und verhindert dadurch ein Rückkippen des ersten Elements 5 und/oder ein weiteres Abkippen. Abweichend von der Darstellung in der Fig. 9 kann es auch vorteilhaft sein, den Rastbügel 14 an dem dritten Element 7 der Führungseinrichtung oder direkt an dem ersten Teil 2 der Vorrichtung 1 anzulenken und die zugehörige Rastaufnahme für das Einrasten des freien Endes des Rastbügels 14 an dem ersten Element 5 der Führungseinrichtung vorzusehen, insbesondere auf der offenen Unterseite der U-förmigen Profilschiene.

Die Anordnung der Rollen 11 weist insgesamt drei Rollen auf, von denen die Drehachse der beiden äußeren Rollen dieselbe Höhe in Bezug auf das erste Element 5 der Führungseinrichtung aufweisen und die Drehachse der mittleren Rolle demgegenüber eine abweichende Höhe aufweist, so dass ein geringes Höhenspiel der Führung erreicht ist.

Das dargestellte Ausführungsbeispiel zeigt eine Vorrichtung 1, die von einer Seite des Fahrzeugs bedienbar ist. In entsprechender Weise können erfindungsgemäße Vorrichtungen auch so ausgestaltet sein, insbesondere zweigeteilt sein, dass eine erste Hälfte von einer ersten Seite des Fahrzeugs bedienbar ist und die andere Hälfte von einer zweiten Seite, insbesondere der gegenüberliegenden Seite. Weiterhin ist es möglich, eine erfindungsgemäße Vorrichtung auch von der Front- und insbesondere Heckseite eines Fahrzeugs zu bedienen, insbesondere die Kippachse des Gelenks 4 nicht wie im Ausführungsbeispiel in Fahrtrichtung vorzusehen, sondern quer hierzu.

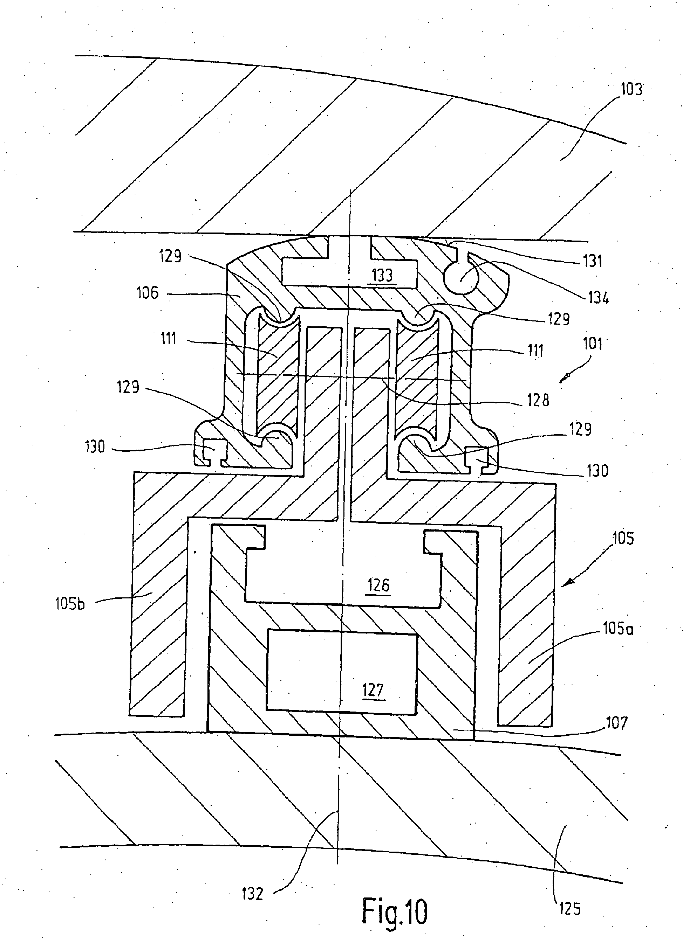

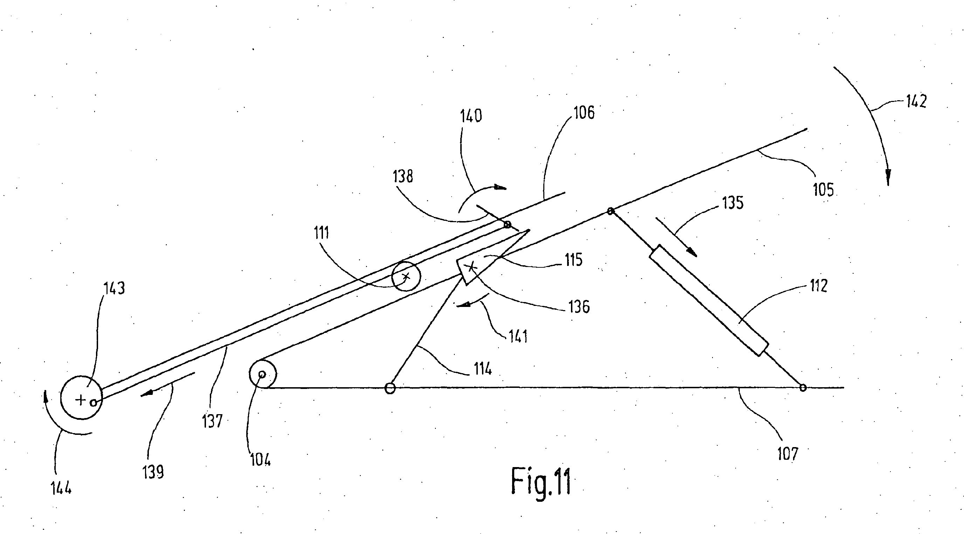

Die Fig. 10 zeigt in vergrößerter Darstellung einen Querschnitt durch ein zweites Ausführungsbeispiel der erfindungsgemäßen Vorrichtung 101. Das dritte Element 107 ist durch eine Profilschiene gebildet, die mit an sich bekannten Befestigungsmitteln beispielsweise an der Reling 125 des Fahrzeuges 10 befestigt ist. Auf seiner dem ersten Element 105 der Führungseinrichtung zugewandten Seite ist das dritte Element 107 im Querschnitt C-förmig ausgebildet und weist insbesondere einen nutförmigen Hohlraum 126 auf, welcher der Aufnahme des Rastbügels 114 und/oder des Kraftspeichers 112 (Fig. 11) dient. Zur Gewichtsersparnis und zur Erhöhung der Stabilität weist das dritte Element 107 darüber hinaus eine Hohlkammer 127 auf.

Das erste Element 105 ist im dargestellten zweiten Ausführungsbeispiel aus zwei im Querschnitt gekröpften Leisten 105a, 105b zusammengesetzt, bei denen es sich um Gleichteile handelt und die beispielsweise durch Aneinanderlegen einander zugeordneter Schenkel und anschließendes Vernieten oder Verschweißen miteinander verbunden sind. Die voneinander beabstandeten Schenkel der beiden Teile 105a, 105b übergreifen U-förmig das dritte Element 7. Das erste Element 105 ist gegenüber dem dritten Element 107 wie vorstehend beschrieben um ein in der Fig. 10 nicht dargestelltes Gelenk 4 (Fig. 1) schwenkbar. Alternativ zu dem Verbinden von zwei Teilen 105a, 105b kann das erste Element 105 auch durch ein entsprechend geformtes Profil einstückig gebildet sein.

An den aneinander liegenden Schenkeln der Teile 105a, 105b ist quer zur Längsrichtung des ersten Elements 105 eine in der Fig. 10 nur schematisch angedeutete Achse 128 angeordnet, auf der auf in Bezug auf das erste Element 105 gegenüberliegenden Seiten jeweils ein Laufrad 111 gelagert ist, dessen Lauffläche im Ausführungsbeispiel im Querschnitt konkav geformt ist. Mittels der Laufräder 111 ist das zweite Element 106 längsbeweglich in Bezug auf das erste Element 105 geführt. Das zweite Element 106 ist im Ausführungsbeispiel durch ein entsprechend geformtes Profil gebildet ist, das im dargestellten Querschnitt einen einseitig offenen Hohlraum aufweist, innerhalb dem insgesamt vier, jeweils paarweise einander gegenüberliegende Stege 129 angeordnet sind, welche eine Abrollfläche für die Laufräder 111 bilden und im Querschnitt an die Kontur der Laufräder 111 angepasst sind, im vorliegenden Fall insbesondere konvex geformt und insbesondere sphärisch ausgebildet sind.

Auf seiner dem ersten Element 105 zugewandten Seite weist das zweite Element 106 außenseitig jeweils einen Hohlraum 130 für die Aufnahme eines Dichtelements auf, insbesondere einer Bürstendichtung, mittels der ein Verschmutzen der Laufflächen verhindert ist.

Auf seiner dem zweiten Teil 103 zugewandten Seite weist das zweite Element 106 eine gekrümmte Oberfläche 131 auf. Dadurch ist gewährleistet, dass das zweite Teil 103 stets eine definierte Auflage auf dem zweiten Element 106 besitzt, auch für den Fall, dass aufgrund einer Krümmung der Reling 125 die Ausrichtung des dritten Elements 107 und damit auch des ersten Elements 105 bzw. des zweiten Elements 106 nicht lotrecht ist, insbesondere auch die Symmetrieebene 132 für das dritte Element 107 und das zweite Element 106 nicht lotrecht ist. Zur Befestigung des zweiten Teils 103, beispielsweise mittels so genannten Nutsteinen, weist das zweite Element 106 auf seiner dem zweiten Teil 103 zugewandten Seite eine entsprechend geformte Nut 133 auf, die beispielsweise einen Hinterschnitt für das Einlegen entsprechend geformter Befestigungsmittel aufweist. Darüber hinaus weist das zweite Element 106 vorzugsweise ebenfalls auf seiner dem zweiten Teil 103 zugewandten Seite eine nach außen offene Führungsnut 134 für ein Verbindungsmittel auf, insbesondere für einen Bowdenzug, mittels dem eine Verrastung des Rastbügels 114 in der Rastaufnahme 115 (Fig. 11) gelöst werden kann.

Die Fig. 11 zeigt eine Seitenansicht des zweiten Ausführungsbeispiels der Fig. 10 in der Beladeposition. In dieser Position ist das zweite Element 106 gemeinsam mit dem ersten Element 105 mittels dem Gelenk 104 gegenüber dem dritten Element 107 gegen die Wirkung des Kraftspeichers 112 gekippt. Der Rastbügel 114 ist mit der Rastaufnahme 115 vorzugsweise formschlüssig verrastet und verhindert dadurch ein Zurückkippen des ersten Elements 105 infolge der durch den Kraftspeicher 112 auf das erste Element 105 einwirkenden Kraft in Richtung des Pfeils 135. Zum Lösen dieser Verrastung ist die Rastaufnahme 115 um die Schwenkachse 136 schwenkbar. Hierzu ist an dem zweiten Element 106 ein Bowdenzug 137 vorgesehen, der an einem Ende an einem Umlenkmittel 138 befestigt ist. Bei einem Ziehen an dem Bowdenzug 137 in Richtung des Pfeils 139 schwenkt das Umlenkmittel 138 in Richtung des Pfeils 140 und betätigt dabei die Rastaufnahme 115 und schwenkt diese in Richtung des Pfeils 141 so weit, bis der Rastbügel 114 nicht mehr in formschlüssigem Eingriff mit der Rastaufnahme 115 ist und demzufolge das erste Element 105 in Richtung des Pfeils 142 zurückgekippt werden kann.

Ein Ziehen an dem Bowdenzug 139 kann dabei durch Drehen eines an dem zweiten Element 106 angeordneten Betätigungsmittel 143 in Richtung des Pfeils 144 erfolgen, wobei der Bowdenzug 139 exzentrisch an dem Betätigungsmittel 143 befestigt ist. Dabei kann an jedem der in Fahrtrichtung hintereinander angeordneten zweiten Element 106 ein solches Betätigungsmittel 143 vorgesehen sein. Besonders vorteilhaft ist allerdings ein gemeinsames Betätigungsmittel 143 für mindestens einen Teil der vorgesehenen zweiten Elemente 106, vorzugsweise für alle zweiten Elemente 106, beispielsweise eine Betätigungsstange, die sich parallel zur Fahrtrichtung erstreckt und die nicht nur zum Lösen der Rastaufnahme eingesetzt werden kann, sondern auch als Handgriff für das Ziehen, Schieben und/oder Kippen des zweiten Teils 3 gegenüber dem ersten Teil 2.

Grundsätzlich können die Elemente der Vorrichtung 101 aus jedem geeigneten Werkstoff hergestellt sein. Besonders vorteilhaft für viele Anwendungsfälle ist aber die Verwendung von Leichtmetallen oder Leichtmetalllegierungen, insbesondere Aluminium oder aluminiumhaltigen Legierungen, für die Profile des ersten, zweiten und dritten Elements 5, 6, 7, 105, 106, 107 der Führungseinrichtung und die Verwendung von einem geeigneten Kunststoff, beispielsweise Polyamid, für die Rollen 11 bzw. Laufräder 111.

## Patentansprüche

1. Vorrichtung (1) zum Tragen von Lasten am Äußeren eines Fahrzeuges (10), insbesondere Lastenträger für ein Kraftfahrzeug, mit einem ersten Teil (2), das an dem Fahrzeug (10) fest montierbar ist, und einem zweiten Teil (3), an dem die zu tragende Last festlegbar ist oder das die zu tragende Last aufnimmt, **dadurch gekennzeichnet, dass** zum Be- oder Entladen das zweite Teil (3) mittels einer Führungseinrichtung (5, 6, 7) gegenüber dem ersten Teil (2) ausgehend von einer Betriebs- oder Fahrposition in eine Beladeposition mit geringerer Ladehöhe überführbar ist.

2. Vorrichtung (1) nach Anspruch 1, **dadurch gekennzeichnet, dass** die Führungseinrichtung (5, 6, 7) sowohl ein Schieben (8) als auch ein Kippen (9) des zweiten Teils (3) gegenüber dem ersten Teil (2) ermöglicht.

3. Vorrichtung (1) nach Anspruch 2, **dadurch gekennzeichnet, dass** ein bezüglich des Schiebens (8) feststehendes erstes Element (5) der Führungseinrichtung (5, 6, 7) mittels eines Gelenks (4) gegenüber dem ersten Teil (2) der Vorrichtung (1) kippbar (9) ist.

4. Vorrichtung (1) nach Anspruch 3, **dadurch gekennzeichnet, dass** ein zweites Element (6) der Führungseinrichtung (5, 6, 7) gegenüber dem ersten Element (5) verschiebbar geführt ist.

5. Vorrichtung (1) nach Anspruch 4, **dadurch gekennzeichnet, dass** das zweite Element (6) gegenüber dem ersten Element (5) linear geführt ist.

6. Vorrichtung (1) nach Anspruch 4 oder 6, **dadurch gekennzeichnet, dass** an dem zweiten Element (6) der Führungseinrichtung (5, 6, 7) das zweite Teil (3) der Vorrichtung (1) fest montierbar ist.

7. Vorrichtung (1) nach einem der Ansprüche 3 bis 6, **dadurch gekennzeichnet, dass** ein drittes Element (7) der Führungseinrichtung (5, 6, 7) an dem ersten Teil (2) der Vorrichtung (1) festlegbar ist und eine Gelenkstelle für das Gelenk (4) mit dem zweiten Element (6) aufweist.

8. Vorrichtung (1) nach einem der Ansprüche 1 bis 7, **dadurch gekennzeichnet, dass** das zweite Teil (3) der Vorrichtung (1) mittels einer Arretiereinrichtung in der Betriebs- oder Fahrposition arretierbar ist.

9. Vorrichtung (1) nach Anspruch 8, **dadurch gekennzeichnet, dass** durch die Arretiereinrichtung sowohl ein Schieben (8) als auch ein Kippen (9) des zweiten Teils (3) blockierbar ist.

10. Vorrichtung (1) nach Anspruch 9, **dadurch gekennzeichnet, dass** das Kippen (9) des zweiten Teils (3) durch den formschlüssigen Eingriff eines ersten Arretierelements (13) blockierbar ist.

11. Vorrichtung (1) nach Anspruch 10, **dadurch gekennzeichnet, dass** das erste Arretierelement (13) an einer von einem Kippgelenk (4) entfernten Stelle angeordnet ist.

12. Vorrichtung (1) nach Anspruch 10 oder 11, **dadurch gekennzeichnet, dass** die Führungseinrichtung (5, 6, 7) ein erstes Element (5) aufweist, das bezüglich des Schiebens (8) feststehend ist und das mittels eines Gelenks (4) gegenüber dem ersten Teil (2) der Vorrichtung (1) kippbar (9) ist, und ein zweites Element (6) aufweist, das gegenüber dem ersten Element (5) verschiebbar (8) geführt ist, und dass das erste Arretierelement (13) zum Blockieren in das sich in der Betriebs- oder Fahrposition befindliche zweites Element (6) der Führungseinrichtung (5, 6, 7) eingreift.

13. Vorrichtung (1) nach einem der Ansprüche 8 bis 12, **dadurch gekennzeichnet, dass** die Arretiereinrichtung mittels eines Schlüssels (16) verschließbar ist.

14. Vorrichtung (1) nach einem der Ansprüche 8 bis 13, **dadurch gekennzeichnet, dass** die Arretiereinrichtung zwei weitere Arretierungselemente aufweist, durch die unabhängig voneinander das zweite Teil (3) der Vorrichtung (1) in der Betriebs- oder Fahrposition arretierbar ist, und die beide zum Aufheben der Arretierung betätigt werden müssen.

15. Vorrichtung (1) nach einem der Ansprüche 8 bis 14, **dadurch gekennzeichnet, dass** die Arretiereinrichtung einen drehbaren Handgriff (17) aufweist.

16. Vorrichtung (1) nach einem der Ansprüche 1 bis 15, **dadurch gekennzeichnet, dass** mittels einer Rasteinrichtung (14, 15) das zweite Teil (3) in mindestens einer Beladeposition rastbar ist.

17. Vorrichtung (1) nach einem der Ansprüche 1 bis 16, **dadurch gekennzeichnet, dass** die Vorrichtung (1) einen Kraftspeicher (12) aufweist, der beim Überführen des zweiten Teils (3) in die Beladeposition Kraft speichert und damit das Rückführen des zweiten Teils (3) in die Betriebs- oder Fahrposition unterstützt.

18. Vorrichtung (1) nach Anspruch 17, **dadurch gekennzeichnet, dass** die Führungseinrichtung (5, 6, 7) sowohl ein Schieben (8) als auch ein Kippen (9) des zweiten Teils (3) gegenüber dem ersten Teil (2) der Vorrichtung (1) ermöglicht, dass ein bezüglich des Schiebens (8) feststehendes erstes Element (5) der Führungseinrichtung (5, 6, 7) mittels eines Gelenks (4) gegenüber dem ersten Teil (2) der Vorrichtung (1) kippbar (9) ist, und dass der Kraftspeicher (12) mit dem ersten Element (5) der Führungseinrichtung (5, 6, 7) verbunden ist.
